# EUROPEAN PATENT APPLICATION

(11) **EP 4 170 748 A1**
(43) Date of publication of application: **26.04.2023**
(21) Application number: 22203072.8
(22) Date of filing: 21.10.2022
(51) Int. Cl.: H01M 4/133, H01M 4/134, H01M 4/38, H01M 4/587, H01M 4/62, H01M 10/0525

(54) **NEGATIVE ELECTRODE FOR SECONDARY BATTERY WITH IMPROVED RATE PROPERTY AND SECONDARY BATTERY COMPRISING THE SAME**

(30) Priority: 22.10.2021 KR 20210141882
(71) Applicant: SK On Co., Ltd., Seoul 03161 (KR)
(72) Inventor: KIM, Sung Do, 34124 Daejeon (KR); JEONG, Kwang Ho, 34124 Daejeon (KR)
(74) Representative: Stolmár & Partner Patentanwälte PartG mbB

(57) **Abstract**

A negative electrode includes a negative electrode current collector and a negative electrode mixture layer provided on at least one surface of the negative electrode current collector. The negative electrode mixture layer includes a negative electrode active material, a binder, and an additive containing a conductive polymer and a template compound. The conductive polymer included in the negative electrode may lower resistance of the electrode by providing an electron movement path for the negative electrode active material and the conductive material of the negative electrode. Stable electrical conductivity may be maintained while significantly reducing the content of conductive materials such as carbon black and carbon nanotubes, thereby improving lifespan characteristics of the secondary battery.

## Description

### FIELD

The present disclosure relates to a negative electrode having improved lifespan characteristics and a secondary battery including the same.

### BACKGROUND

A lithium ion battery may be manufactured by mixing the positive electrode active material of compound particles containing lithium and the negative electrode active material represented by carbon with a binder, forming a positive electrode active material layer and a negative electrode active material layer on the surface of an electrode plate material such as aluminum, copper but is not limited thereto, impregnating the same with electrolyte, and then disposing a so-called separator in the middle thereof, and laminating the same.

Unlike an electric double-layer electrical storage device, for example, a capacitor, which operates while repeating adsorption and desorption on the surface, lithium-ion batteries; in the case of lithium-ion batteries, as lithium ions travel between the positive electrode active material layer and the negative electrode active material layer, charging and discharging processes are repeated, and lithium ions are repeatedly intercalated into the positive electrode active material layer and the negative electrode active material layer and then exited. During this process, the initial discharge capacity decreases as the number of charge and discharge increases, thereby lowering a so-called cycle characteristic such as a decrease in performance.

It is known that the extent to which cycle characteristics deteriorate, for example, the extent to which the initial capacity decreases as charging/discharging is repeated changes depending on the type of active material. In the case of lithium-cobaltoxide (LCO) used as a positive electrode active material or in the case of carbon used as a negative electrode active material, relatively good cycle characteristics is known due to a relatively gentle decrease in initial discharge capacity, but in the case of nickel-cobalt-manganese (NCM) active material or nickel-cobalt-aluminum (NCA) active material into which nickel or aluminum is introduced, or negative active material, active materials such as silicon metal particles or silicon oxide, which are known to have very high capacity, have a sharp decrease in initial capacity according to the number of cycles, and thus, the so-called cycle characteristics rapidly deteriorate.

When manufacturing a lithium ion battery, to enhance the adhesion between such active material particles and in detail, adhesion to the electrode plate, a binder material is used. As commonly used binders, in the case of a positive electrode active material, it is difficult to use an aqueous solvent, and thus, an organic binder such as polyvinylideneflouride (PVDF) may be used, and in the case of a negative electrode active material, a compound such as carboxylated methylcellulose (CMC), styrene-butadiene rubber (SBR), poly acrylic acid (PAA), but is not limited thereto. Such compounds are used alone or in the form of a mixture thereof mixed with each other.

These binder materials, and conductive materials and active materials such as carbon black and carbon nanotubes used to enhance electrical conductivity are mixed with a solvent such as water, and N-methyl-2-pyrrolidone (NMP), thereby creating an active material composition, which is also formed as a coating film of a certain thickness on the electrode plate, to then be used as an electrode material, thereby manufacturing lithium-ion batteries.

The negative electrode including the conductive material and the binder has reduced adhesion with a binder material due to volume expansion during the charging/discharging process, or the electrical conductivity is frequently lowered, which leads to deterioration of battery performance and deterioration of lifespan characteristics.

Accordingly, there is a demand for a technology capable of providing stable electrical conductivity and improving the lifespan characteristics by supplementing the disadvantages of conductive materials such as carbon black and carbon nanotubes.

### SUMMARY

An aspect of the present disclosure is to provide a negative electrode in which lifespan characteristics of a lithium ion battery may be improved by providing stable electrical conductivity to an electrode even when volume expansion occurs due to repeated charging and discharging of the negative electrode, and a secondary battery including the same.

According to an aspect of the present disclosure, a negative electrode includes a negative electrode current collector and a negative electrode mixture layer provided on at least one surface of the negative electrode current collector. The negative electrode mixture layer includes a negative electrode active material, a binder, and an additive containing a conductive polymer and a template compound.

The negative electrode active material may be at least one selected from the group consisting of a carbon-based negative electrode active material and a silicon-based negative electrode active material.

The binder may be at least one selected from the group consisting of carboxymethyl cellulose, styrene butadiene rubber and polyacrylic acid.

The binder may include polyacrylic acid.

The conductive polymer may be at least one selected from the group consisting of poly(ethylenedioxythiophene) (PEDOT), polyacetylene (PA), polypyrrole (PPy), polythiophene (PT), polyparaphenylene (PPP), polyparaphenylenesulfide (PPS), poly(p-phenylenevinylene (PPV) and poly(aniline) (PANI).

The template compound may be at least one selected from the group consisting of polyacrylic acid, carboxymethyl cellulose, and polyvinyl alcohol-polyacrylic acid copolymer.

A weight ratio of the conductive polymer and the template compound may be 9:1 to 2:8.

The binder and the template compound of the additive may be the same material as each other.

The binder and the template compound of the additive may be different materials from each other.

The additive may be included in an amount of 1% by weight or less based on a total weight of the negative electrode mixture layer.

The negative electrode may further include a conductive material.

The conductive material may be included in an amount of 0.3% by weight or less based on a total weight of the negative electrode mixture layer.

A bulk resistance of the negative electrode may be 0.06 Ω·cm or less.

According to an aspect of the present disclosure, a secondary battery including the negative electrode described above is provided.

### DETAILED DESCRIPTION

According to an embodiment, a negative electrode having improved lifespan characteristics and a secondary battery including the same are provided.

According to an embodiment, a negative electrode includes a negative electrode current collector and a negative electrode mixture layer formed on at least one surface of the negative electrode current collector. The negative electrode mixture layer includes a negative electrode active material, a binder, and an additive containing a conductive polymer and a template compound.

The negative electrode current collector is not particularly limited as long as it has conductivity without causing a chemical change in the battery, and any material known in the art may be used. As the negative electrode current collector, for example, copper, stainless steel, aluminum, nickel, titanium, fired carbon, copper or stainless steel surface treated with carbon, nickel, titanium, silver(but is not limited thereto), an aluminum-cadmium alloy, may be used, but is not limited thereto. In addition, the bonding strength of the negative electrode active material may be strengthened by forming fine irregularities on the surface, and various forms such as a film, a sheet, a foil, a net, a porous body, a foam body, a nonwoven body and the like may be used.

The negative electrode active material may be at least one selected from the group consisting of a carbon-based negative electrode active material and a silicon-based negative electrode active material. Although not particularly limited, the carbon-based negative active material may be, for example, at least one selected from the group consisting of artificial graphite, natural graphite, and graphitized mesocarbon microbeads, and in detail, may be artificial graphite. As the silicon-based negative active material, at least one selected from the group consisting of SiOx (0≤x<2) particles, Si-C composites, and Si-Y alloys (where Y is an element selected from the group consisting of alkali metal, alkaline earth metal, transition metal, group 13 element, group 14 element, rare earth element, and combinations thereof) may be used, for example, SiO.

According to an embodiment, the negative electrode active material may include both a carbon-based negative electrode active material and a silicon-based negative electrode active material. By simultaneously including the silicon-based negative electrode active material and the carbon-based negative electrode active material, the capacity of the battery may be improved, and the change in volume of the negative active material that may be expressed during charging and discharging of the negative electrode is suppressed, thereby improving the lifespan of the negative electrode.

A binder may be included to improve binding between the negative electrode active material and the conductive material to be described later and adhesion to the negative electrode current collector. An example of the binder may include at least one selected from the group consisting of, for example, polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber (SBR), fluororubber, and polyacrylic acid (PAA). According to an embodiment, the binder may be preferably at least one selected from the group consisting of carboxymethyl cellulose, styrene butadiene rubber, and polyacrylic acid.

The negative electrode according to an embodiment includes an additive, and the additive may include a conductive polymer imparting conductivity, and a template compound electrically coupled to the conductive polymer. The additive may improve the lifespan characteristics of a lithium ion battery by imparting stable electrical conductivity to the negative electrode even when volume expansion occurs due to charging and discharging in the negative electrode.

In more detail, the conductive polymer may provide an electron movement path of the negative electrode active material and the conductive material in the negative electrode, and thus may lower the resistance of the negative electrode. The conductive polymer is not particularly limited, and for example, may be at least one selected from the group consisting of poly (ethylenedioxythiophene) (PEDOT), polyacetylene (PA), polypyrrole (PPy), polythiophene (PT), polyparaphenylene (PPP), polyparaphenylenesulfide (PPS), poly(p-phenylenevinylene (PPV), and poly(aniline) (PANI), and may be preferably PEDOT.

The template compound is a compound electrically coupled to the conductive polymer, and may serve to dissolve the conductive polymer in a solvent such as water. The template compound may be an aqueous binder, and may be a material allowing the conductive polymer to be dissolved in a solvent such as water. The template compound may include at least one selected from, for example, polyvinyl alcohol (PVA), polyacrylic acid (PAA), polyethylene glycol (PEG), polyacrylonitrile (PAN), polyacrylamide (PAM), carboxylmethyl cellulose (CMC), and polyvinyl alcohol-poly acrylic acid copolymer. In an embodiment, preferably, the template compound may be at least one selected from the group consisting of polyacrylic acid, carboxymethyl cellulose, and polyvinyl alcohol-polyacrylic acid copolymer.

The additive according to an embodiment containing the above-described conductive polymer and template compound imparts electrical conductivity to the binder, which is the only non-conductor in the negative electrode, thereby providing an electron transfer path between the negative electrode active material and a conductive material to be described later.

On the other hand, in the additive, the weight ratio of the conductive polymer and the template compound is preferably 9:1 to 2:8. As the content of the conductive polymer increases, the resistance of the negative electrode is reduced and the lifespan characteristics are improved, but if the weight ratio of the conductive polymer exceeds 9, the affinity between the template compound and the binder is lowered, and a problem in that the lifespan characteristics are not improved may occur.

The binder and the template compound of the additive may be the same material or different from each other, and when the binder and the template compound of the additive are the same material, affinity increases, more preferably.

The additive may be included in an amount of 1% by weight or less based on the total weight of the negative electrode mixture layer. If the additive is added in an amount of more than 1%, a phenomenon of aggregation of the additive and the binder occurs, and there is a problem in that microscale particles (grains) are formed in the slurry. On the other hand, to provide electrical conductivity, the lower limit may be 0.05 wt% based on the total weight of the negative electrode mixture layer.

The negative electrode according to an embodiment may further include a conductive material to improve electrical conductivity. The conductive material is not particularly limited, but may be, for example, at least one selected from the group consisting of graphite, carbon black, carbon nanotubes, metal powder, and conductive oxides, and preferably may include carbon black or carbon nanotubes.

According to an embodiment, the conductive material may be included in an amount of 0.3 wt% or less based on the total weight of the negative electrode mixture layer. While the conductive material may improve electrical conductivity, if the conductive material is included in an excessively large amount, the content of the negative electrode active material decreases, which may lead to a decrease in capacity. However, since the negative electrode according to an embodiment contains a conductive polymer and a template compound, stable electrical conductivity may be maintained while significantly reducing the content of the conductive material.

Accordingly, the bulk resistance of the manufactured negative electrode may be 0.06 Ω·cm or less. As described above, the additive included in the negative electrode according to an embodiment may lower the resistance of the electrode by providing an electron movement path of the conductive material and the negative electrode active material of the negative electrode.

A method of manufacturing a negative electrode according to an embodiment is not particularly limited, and may be performed using a known method. For example, the negative electrode according to an embodiment may be manufactured, using a solvent such as water, NMP(but is not limited thereto) to prepare a negative electrode slurry including the above-described negative electrode active material, binder, additive and conductive material, and then coating, drying and rolling on the negative electrode current collector. As the coating of the negative electrode slurry, a coating method using a slot die may be used, and other methods such as Mayer bar coating method, gravure coating method, dip coating method, spray coating method, may be used, but is not limited thereto. In detail, since relatively high adhesion may be secured by closely adhering to the substrate with strong pressure and a relatively easy process may be applied, it may be advantageous to use the spray coating method for application of mass-production.

Drying and rolling the negative electrode current collector to which the negative electrode slurry is applied may be performed by a method generally performed in the art, and is not particularly limited. For example, drying may be performed, for example, in a dry atmosphere at room temperature, but is not limited thereto, and after drying, rolling may be performed by passing through a metal rolling roll of calendering equipment.

According to another embodiment, a secondary battery including the above-described negative electrode; a positive electrode; and a separator interposed between the negative electrode and the positive electrode is provided.

As the positive electrode, any positive electrode known in the art may be applied. For example, in the case of a positive electrode, a thin plate formed of aluminum, stainless steel, or nickel may be used as the positive electrode current collector, and it may be preferable to use a thin plate formed of aluminum. In addition, a porous body such as a mesh or mesh shape may be used, and may be coated with an oxidation-resistant metal or alloy film to prevent oxidation.

The positive electrode active material is a compound capable of reversible intercalation and deintercalation of lithium, and may include at least one type of transition metal consisting of nickel, cobalt, manganese and aluminum, and a lithium transition metal composite oxide containing lithium, preferably, a transition metal containing nickel, cobalt and manganese and lithium transition metal composite oxide containing lithium.

The positive electrode may further include a binder to improve binding between the active material and the conductive material and adhesion to the current collector, and may include a conductive material to improve electrical conductivity. In this case, a detailed description of specific types of the binder and the conductive material will be omitted.

In addition, as the separator, any separation film recognized in the art may be applied. The separator is a physical separator having a function of physically separating the electrodes, and may be used without any particular limitation as long as it is used as a separator of the related art, and in detail, it may be preferable that the separator has low resistance to ion movement of the electrolyte and excellent moisture content of the electrolyte. The separator separates or insulates the positive electrode and the negative electrode from each other and enables transport of lithium ions between the positive electrode and the negative electrode. The separator may be formed of a porous, non-conductive or insulating material. The separator may be an independent member such as a film, or may be a coating layer added to the positive electrode and/or the negative electrode.

An example of the polyolefin-based porous membrane that may be used as the separator may include polyethylene such as high-density polyethylene, linear low-density polyethylene, low-density polyethylene and ultra-high molecular weight polyethylene, and polyolefin-based polymers such as polypropylene, polybutylene, polypentene, but is not limited thereto, respectively alone, or a film formed of a mixed polymer thereof.

In addition, examples of the nonwoven fabric that may be used as the separator include polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester, but is not limited thereto, respectively alone or a mixed polymer thereof. This non-woven fabric is in the form of a fiber forming a porous web, and may include a spunbond or meltblown form formed of long fibers.

The secondary battery according to an embodiment has improved lifespan characteristics. A secondary battery module may be configured by using the secondary battery as a unit cell, and one or more of the modules may be packaged in a pack case to form a secondary battery pack. The above-described secondary battery module and the secondary battery pack including the same may be applied to various devices. Examples of various devices may include transportation means such as an electric bicycle, an electric vehicle, and a hybrid vehicle, but the present disclosure is not limited thereto. For example, the present disclosure may be applied to various devices that may use a secondary battery module and a secondary battery pack including the same, which also falls within the scope of the present disclosure.

### Example

### Example 1

A negative electrode, including the negative electrode active material composed of 87.55% by weight of graphite and 9% by weight of silicon, 0.25% by weight of carbon black as a conductive material, 1.2% by weight of CMC and 1.5% by weight of SBR as binders, and conductive polymer PEDOT and template compound carboxylmethylcellulose (CMC) of 0.5 by weight as additives, was prepared. In this case, the weight ratio of the conductive polymer and the template compound was controlled to be 8:2. The bulk resistance and 200 cycle capacity retention of the negative electrode were measured, and the results are illustrated in Table 1 below.

### Example 2

A negative electrode was prepared in the same manner as in Example 1, except that the weight ratio of the conductive polymer and the template compound was controlled to be 5:5.

### Example 3

A negative electrode was prepared in the same manner as in Example 1, except that the weight ratio of the conductive polymer and the template compound was controlled to be 2:8.

### Example 4

A negative electrode, comprising a negative electrode active material composed of 88.25% by weight of graphite and 9% by weight of silicon, 0.25% by weight of carbon black as a conductive material, 2% by weight of polyacrylic acid (PAA) as a binder, and 0.5% by weight of conductive polymer PEDOT and template compound PAA as an additive, was prepared. In this case, the weight ratio of the conductive polymer and the template compound was controlled to be 9:1.

### Example 5

A negative electrode was prepared in the same manner as in Example 4, except that the weight ratio of the conductive polymer and the template compound was controlled to 2:8.

### Example 6

A negative electrode was prepared in the same manner as in Example 4, except that the weight ratio of the conductive polymer and the template compound was controlled to 5:5.

### Example 7

A negative electrode was prepared in the same manner as in Example 4, except that the weight ratio of the conductive polymer and the template compound was controlled to 2:8.

### Example 8

A negative electrode was prepared in the same manner as in Example 4, except that the weight ratio of the conductive polymer and the template compound was controlled to 1:9.

### Example 9

A negative electrode was prepared in the same manner as in Example 2, except that polyacrylic acid (PAA) was used as the template compound.

### Example 10

A negative electrode was prepared in the same manner as in Example 4 except that carboxymethyl cellulose (CMC) was used as the template compound.

### Comparative Example 1

A negative electrode comprising a negative electrode active material composed of 88.05% by weight of graphite and 9% by weight of silicon, 0.25% by weight of carbon black as a conductive material, and 1.2% by weight of CMC and 1.5% by weight of SBR as a binder was prepared.

### Comparative Example 2

A negative electrode comprising a negative electrode active material composed of 88.75% by weight of graphite and 9% by weight of silicon, 0.25% by weight of carbon black as a conductive material, and 2% by weight of PAA as a binder was prepared.

The bulk resistance and 200 cycle capacity retention of the negative electrodes of Examples 1 to 10 and Comparative Examples 1 and 2 were measured, and the results are illustrated in Table 1 below.

**[Table 1]**

| | Binder | Binder content (wt%) | Template compound of additive | Additive content (wt%) | Conductive polymer: template compound weight ratio | Bulk resistance of Negative electrode (Qcm) | 200^{th} cycle retention (%) |
|---|---|---|---|---|---|---|---|
| Comparative example 1 | CMC/ SBR | 1.2/1.5 | - | - | - | 0.1132 | 84.5 |
| Comparative example 2 | PAA | 2 | - | - | - | 0.0996 | 87.1 |
| Example 1 | CMC/ SBR | 1.2/1.5 | CMC | 0.5 | 8:2 | 0.0609 | 96.2 |
| Example 2 | CMC/ SBR | 1.2/1.5 | CMC | 0.5 | 5:5 | 0.0666 | 95.4 |
| Example 3 | CMC/ SBR | 1.2/1.5 | CMC | 0.5 | 2:8 | 0.0822 | 91.4 |
| Example 4 | PAA | 2 | PAA | 0.5 | 9:1 | 0.0563 | 92.2 |
| Example 5 | PAA | 2 | PAA | 0.5 | 8:2 | 0.0590 | 96.5 |
| Example 6 | PAA | 2 | PAA | 0.5 | 5:5 | 0.0645 | 95.9 |
| Example 7 | PAA | 2 | PAA | 0.5 | 2:8 | 0.0738 | 92.7 |
| Example 8 | PAA | 2 | PAA | 0.5 | 1:9 | 0.0902 | 91.3 |
| Example 9 | CMC/ SBR | 1.2/1.5 | PAA | 0.5 | 5:5 | 0.0671 | 92.3 |
| Example 10 | PAA | 2 | CMC | 0.5 | 5:5 | 0.0652 | 93.6 |

Compared to Comparative Examples 1 and 2 not containing the additive, Examples 1 to 10 including the additive have reduced resistance and increased capacity retention, and therefore, it can be seen that the lifespan of the electrode is improved. On the other hand, when the binder and the template compound are of the same material, the effect of improving resistance and lifespan properties is better than when the binder and the template compound are different materials.

As set forth above, the conductive polymer included in the negative electrode according to an embodiment may lower the resistance of the electrode by providing an electron movement path for the negative electrode active material and the conductive material of the negative electrode.

In addition, according to an embodiment, stable electrical conductivity may be maintained while significantly reducing the content of a conductive material such as carbon black and carbon nanotubes, thereby improving the lifespan characteristics of the secondary battery.

## Claims

1. A negative electrode comprising:
a negative electrode current collector and a negative electrode mixture layer provided on at least one surface of the negative electrode current collector,
wherein the negative electrode mixture layer includes a negative electrode active material, a binder, and an additive containing a conductive polymer and a template compound.

2. The negative electrode of claim 1, wherein the negative electrode active material is at least one selected from the group consisting of a carbon-based negative electrode active material and a silicon-based negative electrode active material.

3. The negative electrode of any of claims 1 or 2, wherein the binder is at least one selected from the group consisting of carboxymethyl cellulose, styrene butadiene rubber and polyacrylic acid.

4. The negative electrode of any of claims 1 to 3, wherein the binder includes polyacrylic acid.

5. The negative electrode of any of claims 1 to 4, wherein the conductive polymer is at least one selected from the group consisting of poly(ethylenedioxythiophene) (PEDOT), polyacetylene (PA), polypyrrole (PPy), polythiophene (PT), polyparaphenylene (PPP), polyparaphenylenesulfide (PPS), poly(p-phenylenevinylene (PPV) and poly(aniline) (PANI).

6. The negative electrode of any of claims 1 to 5, wherein the template compound is at least one selected from the group consisting of polyacrylic acid, carboxymethyl cellulose, and polyvinyl alcohol-polyacrylic acid copolymer.

7. The negative electrode of any of claims 1 to 6, wherein a weight ratio of the conductive polymer and the template compound is 9:1 to 2:8.

8. The negative electrode of any of claims 1 to 7, wherein the binder and the template compound of the additive are the same material as each other.

9. The negative electrode of any of claims 1 to 8, wherein the binder and the template compound of the additive are different materials from each other.

10. The negative electrode of any of claims 1 to 9, wherein the additive is included in an amount of 0.05% to 1% by weight based on a total weight of the negative electrode mixture layer.

11. The negative electrode of any of claims 1 to 10, further comprising a conductive material.

12. The negative electrode of claim 11, wherein the conductive material is included in an amount of 0.25 to 0.3% by weight based on a total weight of the negative electrode mixture layer.

13. The negative electrode of any of claims 1 to 12, wherein a bulk resistance of the negative electrode is 0.06 Ω·cm or less.

14. A secondary battery comprising:
the negative electrode of any of claims 1 to 13, a positive electrode, and a separator interposed between the negative electrode and the positive electrode.
